# EUROPEAN PATENT SPECIFICATION

(11) **EP 3 827 711 B1**
(45) Date of publication and mention of the grant of the patent: **01.11.2023**
(21) Application number: 20207836.6
(22) Date of filing: 16.11.2020
(51) Int. Cl.: A47J 27/62, A47J 43/07, A47J 27/00

(54) **HIGH-SPEED BLENDER**
HOCHGESCHWINDIGKEITSMISCHER
MÉLANGEUR À GRANDE VITESSE

(30) Priority: 29.11.2019 CN 201911198167
(43) Date of publication of application: 02.06.2021
(73) Proprietor: BSH Hausgeräte GmbH, 81739 München (DE)
(72) Inventor: Lu, Peng, Nanjing, 210046 (CN); Xue, Qingfei, JuRong, 212426 (CN); Yuan, Chao, Nanjing, 210046 (CN)

(56) References cited:
- CN-B- 103 960 971
- CN-U- 202 858 803
- CN-U- 208 463 815
- US-A1- 2019 174 959

## Description

### BACKGROUND

### Technical Field

The present invention relates to the field of high-speed blender technologies, and in particular, to a high-speed blender.

### Related Art

The high-speed blender is a common small household appliance in our daily life, and integrates functions of products such as a juicer, a soy milk machine, a food processor, and a grinder, fully achieving a plurality of functions in one machine. A high-speed blender in the prior art may cause foam overflow when heating and grinding food materials. Therefore, the high-speed blender in the prior art is provided with an anti-overflow device. Generally, a probe is disposed in a cover body of the high-speed blender. The probe is electrically connected to a control device of the high-speed blender through a connection circuit. When the foam overflows and comes into contact with the probe, the connection circuit is powered on. In this case, the control device controls the high-speed blender to stop heating and grinding according to the conduction state of the connection circuit, to prevent overflow.

In the prior art, the manner of the electrical connection between the probe and the control device of the high-speed blender is relatively ordinary. Generally, an electrical connection interface is disposed on a cup body of the high-speed blender, and an electrical connection plug is disposed on the cover body of the high-speed blender. When the cover body covers the cup body, the electrical connection plug is correspondingly inserted into the electrical connection interface. However, such an electrical connection method has drawbacks. For example, the high-speed blender generates vibration when working, and therefore, the connection between the plug and the interface is easily loosened, affecting the stability of the electrical connection; and impurities easily enter the electrical connection interface to generate dirt, and it is difficult to remove the dirty.

A high-speed blender of the prior art is known from CN-U-208463815.

Based on the above, there are problems of poor stability of electrical connection and proneness to generate dirt that exist in the electrical connection mode between a probe and a control device of a high-speed blender in the prior art.

### SUMMARY

The present invention provides an anti-overflow device for a high-speed blender, and a high-speed blender, to resolve the problems of poor stability of electrical connection and proneness to generate dirt that exist in the electrical connection mode between a probe and a control device of a high-speed blender in the prior art.

The high-speed blender provided according to the present invention includes a cup body, a cover body, and an electric assembly;
the cover body is provided with a detecting member;
the electric assembly includes an elastic member, an electric contact, and an electric elastic piece,
where an end of the elastic member is connected to the detecting member, and another end is connected to the electric contact;
the electric contact is disposed on the cover body, and is reciprocable along an axial direction of the elastic member; the electric elastic piece is disposed on an open peripheral wall of the cup body, and is electrically connected to a control device of the high-speed blender; and
when the cover body covers the cup body, the electric contact correspondingly compresses the electric elastic piece under elasticity of the elastic member, so that the detecting member is electrically connected to the control device.

According to an embodiment, the detecting member is embedded on a peripheral wall of the cover body;
the detecting member includes a detecting portion, and a detecting hole is provided on an inner side of the peripheral wall of the cover body corresponding to the detecting portion;
foam overflowing from the cup body comes into contact with the detecting portion of the detecting member through the detecting hole, so that the detecting member is powered on; and
the control device controls the high-speed blender to stop heating and grinding when the detecting member is powered on.

According to an embodiment, the detecting member includes a first detecting piece and a second detecting piece;
the first detecting piece and the second detecting piece are arranged at an interval on the peripheral wall of the cover body, and are respectively electrically connected to the control device through the respective electric assembly; and
when the foam overflowing from the cup body comes into contact with the detecting portion, a power-on circuit is formed between the first detecting piece, the second detecting piece, and the control device.

According to an embodiment, the detecting member includes a detecting piece;
the detecting piece is electrically connected to the control device through the electric assembly; and
when the foam overflowing from the cup body comes into contact with the detecting portion, a power-on circuit is formed between the detecting piece, the control device, and a heating plate of the high-speed blender.

According to an embodiment, the cover body is provided with a limiting post; and
a portion connecting the detecting member and the elastic member is provided with a mounting hole, and the detecting member is mounted on the cover body in a manner of sleeving the mounting hole on the limiting post.

In a possible design, the cover body is further provided with a limiting barrel;
the limiting barrel is coaxially sleeved at an interval outside the limiting post, and forms a mounting space with the limiting post; and
the elastic member is disposed in the mounting space with an end abutting against the detecting member and sleeved on the limiting post.

In a possible design, an end of the limiting barrel that is away from the cover body forms a necking edge; and
the electric contact is disposed in the mounting space with a side abutting against the elastic member and another side abutting against the necking edge.

According to an embodiment, the electric contact is a spherical contact.

According to an embodiment, the electric contact is a columnar contact, and a side of the columnar contact facing toward the necking edge is provided with a hemispherical projecting portion.

According to an embodiment, the detecting member and the cover body are integrally formed through insert molding.

The technical solutions according to the present invention may achieve the following beneficial effects:
The high-speed blender according to the present invention includes a cup body, a cover body, and an electric assembly; the cover body is provided with a detecting member; the electric assembly includes an elastic member, an electric contact, and an electric elastic piece, where an end of the elastic member is connected to the detecting member, and another end is connected to the electric contact; the electric contact is disposed on the cover body, and is reciprocable along an axial direction of the elastic member; the electric elastic piece is disposed on an open peripheral wall of the cup body, and is electrically connected to a control device of the high-speed blender; and when the cover body covers the cup body, the electric contact correspondingly compresses the electric elastic piece under elasticity of the elastic member, so that the detecting member is electrically connected to the control device.

As compared with the connection mode between a probe and a control device of a high-speed blender through a plug and an interface in the prior art, in the high-speed blender provided in this invention, the detecting member is electrically connected to the control device through the electric assembly. When the cover body covers the cup body, the electric contact compresses the electric elastic piece under elasticity of the elastic member. Therefore, the high-speed blender has good abutting stability, and the elastic member and the electric elastic piece can absorb the working vibration of the high-speed blender. The present invention resolves the problems of poor stability of electrical connection and proneness to generate dirt that exist in the electrical connection mode between a probe and a control device of a high-speed blender in the prior art.

Other features and advantages of embodiments of the present invention are described in a subsequent specification, and are partially apparent from the specification, or are understood by implementing the embodiments of this invention. An objective and other advantages of the embodiments of the present invention are achieved and obtained in structures that are specially pointed out in the specification and the accompanying drawings.

### BRIEF DESCRIPTION OF THE DRAWINGS

FIG. 1 is a longitudinal sectional view of a high-speed blender according to an embodiment of this invention;
FIG. 2 is a partially enlarged view of FIG. 1;
FIG. 3 is a schematic diagram of mounting of a detecting member and an electric assembly of a high-speed blender according to an embodiment of this invention;
FIG. 4 is a schematic circuit diagram of a high-speed blender according to a first embodiment of this invention; and
FIG. 5 is a schematic circuit diagram of a high-speed blender according to a second embodiment of this invention.

### Reference numerals:

1-Cover body;
11-Detecting hole;
12-Limiting post;
13-Limiting barrel;
131-Necking edge;
2-Cup body;
3-Detecting member;
31-Mounting hole;
4-Elastic member;
5-Electric contact;
6-Electric elastic piece;
7-Control device;
8-Heating plate.

The accompanying drawings, which are incorporated herein and constitute a part of this specification, illustrate embodiments consistent with the present invention and, together with the specification, serve to explain the principles of this invention.

### DETAILED DESCRIPTION

To better understand the technical solutions of the present invention, the embodiments of this invention are described below in detail with reference to the accompanying drawings.

It should be clear that the described embodiments are merely some but not all of the embodiments of this invention. All other embodiments obtained by a person of ordinary skill in the art based on the embodiments of this invention without creative efforts shall fall within the protection scope of this invention.

The terms used in the embodiments of the present invention are merely for describing specific embodiments, but are not intended to limit the scope of the present invention. The terms "a", "said" and "the" of singular forms used in the embodiments and the appended claims are also intended to include plural forms, unless otherwise specified in the context clearly.

It should be appreciated that the term "and/or" in this specification is merely an association relationship for describing associated objects and represents that three types of relationships may exist. For example, A and/or B may represent the following three cases: Only A exists, both A and B exist, and only B exists. In addition, the character "/" in this specification generally indicates an "or" relationship between the associated objects.

It should be noted that nouns of locality such as "above", "below", "left", and "right" described in the embodiments are described from the perspective shown in the accompanying drawings, and should not be construed as a limitation to the embodiments of the scope of the present invention. In addition, in the context, it is further understood that when referring to an element connected "on" or "under" another element, the element may not be merely connected "on" or "under" another element, but also indirectly connected "on" or "under" another element through an intermediate element.

This invention is further described below with reference to the accompanying drawings and specific embodiments.

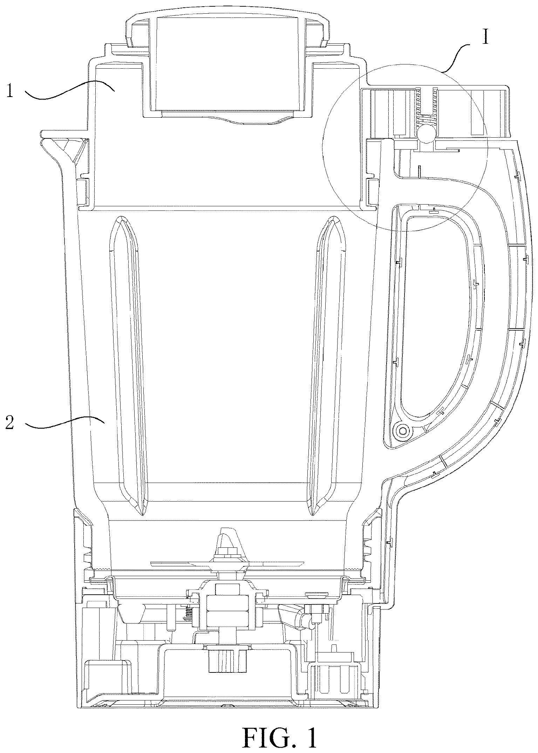

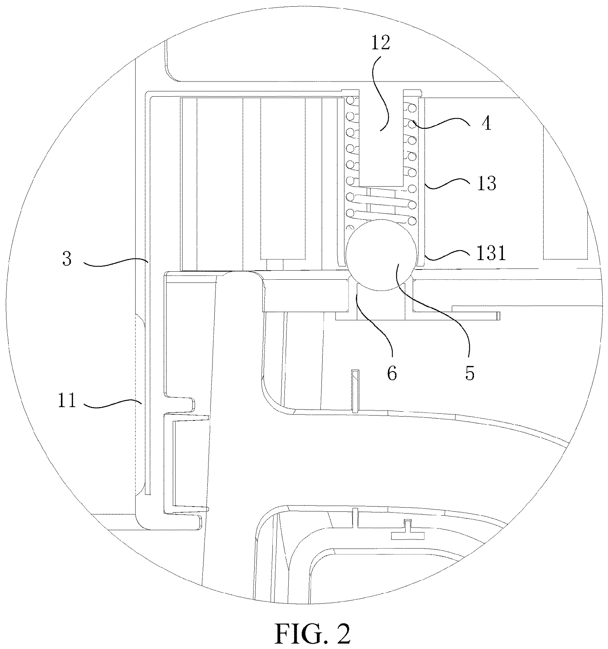

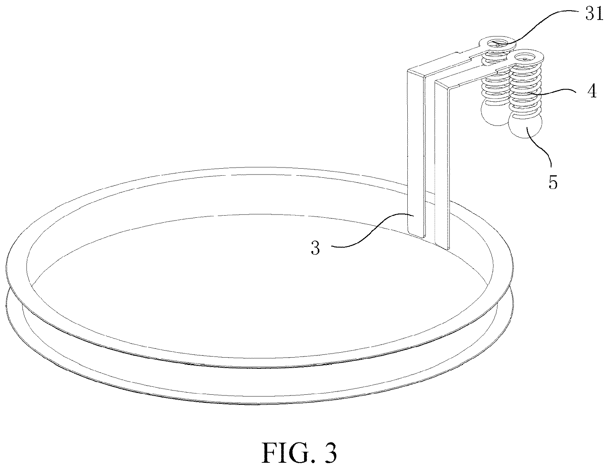

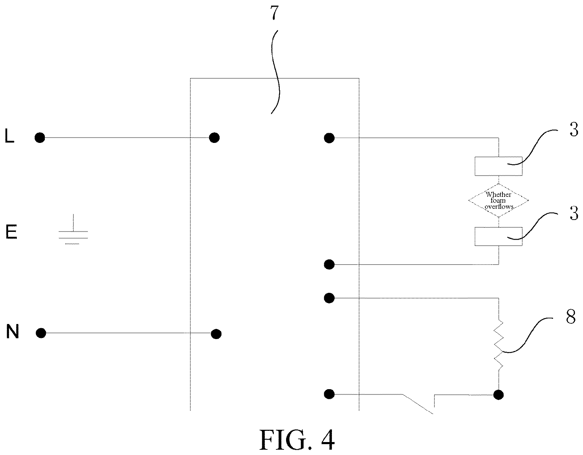

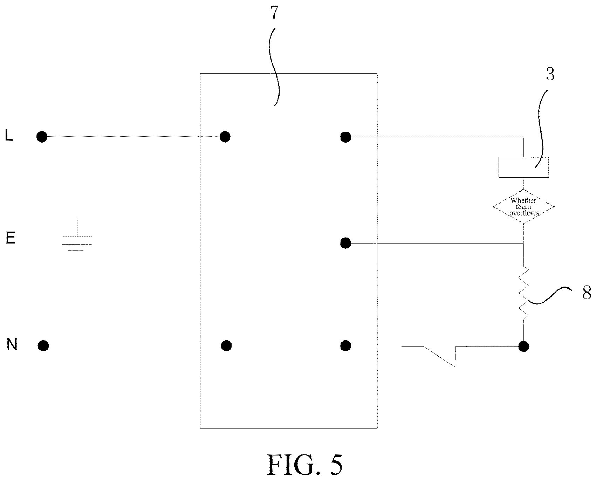

FIG. 1 is a longitudinal sectional view of a high-speed blender according to an embodiment of the present invention; FIG. 2 is a partially enlarged view of FIG. 1; FIG. 3 is a schematic diagram of mounting of a detecting member and an electric assembly of a high-speed blender according to an embodiment of this invention; FIG. 4 is a schematic circuit diagram of a high-speed blender according to a first embodiment of this invention; and FIG. 5 is a schematic circuit diagram of a high-speed blender according to a second embodiment of thapplication present invention.

As shown in FIG. 1 to FIG. 3, an embodiment of the present invention provides a high-speed blender. The high-speed blender includes a cup body 2, a cover body 1, and an electric assembly. The cover body 1 is provided with a detecting member 3. The electric assembly includes an elastic member 4, an electric contact 5, and an electric elastic piece 6. An end of the elastic member 4 is connected to the detecting member 3, and another end is connected to the electric contact 5. The electric contact 5 is disposed on the cover body 1, and is reciprocable along an axial direction of the elastic member 4. The electric elastic piece 6 is disposed on an open peripheral wall of the cup body 2, and is electrically connected to a control device 7 of the high-speed blender. When the cover body 1 covers the cup body 2, the electric contact 5 correspondingly compresses the electric elastic piece 6 under elasticity of the elastic member 4, so that the detecting member 3 is electrically connected to the control device 7.

As compared with the connection mode between a probe and a control device of a high-speed blender through a plug and an interface in the prior art, in the high-speed blender provided in this invention, the detecting member 3 is electrically connected to the control device 7 through the electric assembly. When the cover body 1 covers the cup body 2, the electric contact 5 compresses the electric elastic piece 6 under elasticity of the elastic member 4. Therefore, the high-speed blender has good abutting stability, and the elastic member 4 and the electric elastic piece 6 can absorb the working vibration of the high-speed blender. The present invention resolves the problems of poor stability of electrical connection and proneness to generate dirt that exist in the electrical connection mode between a probe and a control device of a high-speed blender in the prior art.

In an optional solution of this embodiment, the detecting member 3 is embedded on a peripheral wall of the cover body 1; the detecting member 3 includes a detecting portion, and a detecting hole 11 is provided on an inner side of the peripheral wall of the cover body 1 corresponding to the detecting portion; foam overflowing from the cup body 2 comes into contact with the detecting portion of the detecting member 3 through the detecting hole 11, so that the detecting member 3 is powered on; and the control device 7 controls the high-speed blender to stop heating and grinding when the detecting member 3 is powered on.

Specifically, as shown in FIG. 1 and FIG. 2, as compared with the probe-exposed high-speed blender in the prior art, it is convenient and easy to wash the high-speed blender provided in the present invention because the detecting member 3 is embedded on the peripheral wall of the cover body 1 of the high-speed blender. In addition, the detecting member 3 can be prevented from stabbing or scratching a user during the cleaning, or the detecting member is preventing from being bent or damaged.

It is worth noting that the foregoing control device 7 may be specifically configured as a PLC. When foam overflows from the cup body 2 of the high-speed blender, the foam can conduct an electrical connection circuit of the detecting member 3, so that the PLC can control the high-speed blender 7 to stop heating and grinding according to the power-on state of the detecting member 3.

In an optional solution of this embodiment, the detecting member 3 includes a first detecting piece and a second detecting piece; the first detecting piece and the second detecting piece are arranged at an interval on the peripheral wall of the cover body 1, and are separately electrically connected to the control device 7 through the respective electric assembly; and when the foam overflowing from the cup body 2 comes into contact with the detecting portion, a power-on circuit is formed between the first detecting piece, the second detecting piece, and the control device 7.

Specifically, as shown in FIG. 3 and FIG. 4, the detecting member 3 is configured as the first detecting piece and the second detecting piece arranged at an interval. When the foam overflowing from the cup body 2 comes into contact with the first detecting piece and the second detecting piece, the foam can electrically connect the first detecting piece and the second detecting piece, to further form the power-on circuit between the two detecting pieces and the control device 7. In this case, the control device 7 controls a switch of the heating plate 8 to be turned off according to the circuit conduction of the first detecting piece and the second detecting piece, so that the heating plate 8 stops heating.

The detecting member 3 is configured as the first detecting piece and the second detecting piece on the cover body 1, and the control device 7 controls the heating state of the heating plate 8 according to the conduction of the first detecting piece and the second detecting piece, and there are advantages of fast control response and accurate judgment.

In addition, this embodiment further provides another solution of the detecting member 3, where the detecting member 3 includes a detecting piece; the detecting piece is electrically connected to the control device 7 through the electric assembly; and when the foam overflowing from the cup body 2 comes into contact with the detecting portion, a power-on circuit is formed between the detecting piece, the control device 7, and a heating plate 8 of the high-speed blender.

Specifically, FIG. 5 is used for a detailed description. The detecting member 3 is configured as a detecting piece. When the foam overflowing from the cup body 2 comes into contact with the detecting piece, the foam can electrically connect the detecting piece and the heating plate 8, to further form the power-on circuit between the two and the control device 7. In this case, the control device 7 controls a switch of the heating plate 8 to be turned off according to the circuit conduction of the detecting piece, so that the heating plate 8 stops heating.

The detecting member 3 is configured as the detecting piece on the cover body 1, and the control device 7 controls the heating state of the heating plate 8 according to the conduction of the detecting piece and the heating plate 8, and there is the advantage of a simple structure.

In an optional solution of this embodiment, the cover body 1 is provided with a limiting post 12; and a portion connecting the detecting member 3 and the elastic member 4 is provided with a mounting hole 31, and the detecting member 3 is mounted on the cover body 1 in a manner of sleeving the mounting hole 31 on the limiting post 12.

Specifically, as shown in FIG. 2, with the configuration of the limiting post 12, on the one hand, the limiting detecting member 3 can be further fixed on the mounting hole 31 of the detecting member 3; and on the other hand, the elastic member 4 can be sleeved on the limiting post 12 and stretch along the limiting post 12, and implements the function of mounting and limiting the elastic member 4.

In an optional solution of this embodiment, the cover body 1 is further provided with a limiting barrel 13; the limiting barrel 13 is coaxially sleeved at an interval outside the limiting post 12, and forms a mounting space with the limiting post 12; and the elastic member 4 is disposed in the mounting space with an end abutting against the detecting member 3 and sleeved on the limiting post 12.

Specifically, as shown in FIG. 2, the limiting barrel 13 is coaxially sleeved at an interval outside the limiting post 12, and forms a mounting space with the limiting post 12. Not only the elastic member 4, but also the electric contact 5 can be mounted in the mounting space. Therefore are the advantages of a simple structure and convenient mounting.

In an optional solution of this embodiment, an end of the limiting barrel 13 that is away from the cover body 1 forms a necking edge 131; and the electric contact 5 is disposed in the mounting space with a side abutting against the elastic member 4 and another side abutting against the necking edge 131.

Specifically, as shown in FIG. 2, the necking edge 131 can be used for clamping the electric contact 5. To ensure that the electric contact 5 can be normally mounted in the limiting barrel 13, the limiting barrel 13 may be made of a plastic material with good elasticity. In this way, when the electric contact 5 is mounted, the electric contact 5 may be directly pressed into the limiting barrel 13, and the limiting barrel 13 clamps the electric contact 5 through the necking edge 131 depending on its own elastic deformation.

In an optional solution of this embodiment, the electric contact 5 is a spherical contact.

Specifically, as shown in FIG. 2, the electric contact 5 is configured as the spherical contact, and can abut against the electric elastic piece 6 with a cambered surface when abutting against the electric elastic piece 6, so that the electrical connection reliability of the electric contact 5 and the electric elastic piece 6 can be fully ensured.

In an optional solution of this embodiment, the detecting member 3 and the cover body 1 are integrally formed through insert molding.

The detecting member 3 is generally made of a metal material, such as a copper alloy, and the cover body 1 is generally injection-molded from a plastic material. Because melting points of the two materials are quite different, the two materials may be integrally formed through insert molding. In a specific production process, the detecting member 3 may be processed and formed first, then the detecting member 3 is fixed to an injection mold of the cover body 1 through a fixing device, and finally the cover body 1 is formed by molding. In this case, the detecting member 3 and the cover body 1 are integrally formed through insert molding, which has an effect better than that of the conventional clamping and bonding manner. Not only the connection firmness between the two is ensured, but also a corresponding connection mechanism is saved.

The foregoing descriptions are merely preferred embodiments but are not intended to limit the scope of the present invention, which is defined in the appended claims.

## Claims

1. A high-speed blender, comprising
a cup body (2);
a cover body (1), provided with a detecting member (3); and
an electric assembly, comprising an elastic member (4), an electric contact (5), and an electric elastic piece (6),
wherein an end of the elastic member (4) is connected to the detecting member (3), and another end is connected to the electric contact (5);
the electric contact (5) is disposed on the cover body (1), and is reciprocable along an axial direction of the elastic member (4);
the electric elastic piece (6) is disposed on an open peripheral wall of the cup body (2), and is electrically connected to a control device (7) of the high-speed blender; and
when the cover body (1) covers the cup body (2), the electric contact (5) correspondingly compresses the electric elastic piece (6) under elasticity of the elastic member (4), so that the detecting member (3) is electrically connected to the control device (7).

2. The high-speed blender according to claim 1, wherein, the detecting
member (3) is embedded in a peripheral wall of the cover body (1);
the detecting member (3) comprises a detecting portion, and a detecting hole (11) is provided on an inner side of the peripheral wall of the cover body (1) corresponding to the detecting portion;
foam overflowing from the cup body (2) comes into contact with the detecting portion of the detecting member (3) through the detecting hole (11), so that the detecting member (3) is powered on; and
the control device (7) controls the high-speed blender to stop heating and grinding when the detecting member (3) is powered on.

3. The high-speed blender according to claims 1 or 2, wherein, the detecting member (3) comprises a first detecting piece and a second detecting piece;
the first detecting piece and the second detecting piece are arranged at an interval on the peripheral wall of the cover body (1), and are respectively electrically connected to the control device (7) through the respective electric assembly; and
when the foam overflowing from the cup body (2) comes into contact with the detecting portion, a power-on circuit is formed between the first detecting piece, the second detecting piece, and the control device (7).

4. The high-speed blender according to claims 1 or 2, wherein
the detecting member (3) comprises a detecting piece;
the detecting piece is electrically connected to the control device (7) through the electric assembly; and
when the foam overflowing from the cup body (2) comes into contact with the detecting portion, a power-on circuit is formed between the detecting piece, the control device (7), and a heating plate (8) of the high-speed blender.

5. The high-speed blender according to claim 1, wherein the cover body
(1) is provided with a limiting post (12); and
a portion connecting the detecting member (3) and the elastic member (4) is provided with a mounting hole (31), and the detecting member (3) is mounted on the cover body (1) in a manner of sleeving the mounting hole (31) on the limiting post (12).

6. The high-speed blender according to claim 5, wherein the cover body (1) is further provided with a limiting barrel (13):
the limiting barrel (13) is coaxially sleeved at an interval outside the limiting post (12), and forms a mounting space with the limiting post (12); and
the elastic member (4) is disposed in the mounting space with an end abutting against the detecting member (3) and sleeved on the limiting post (12).

7. The high-speed blender according to claim 6, wherein
an end of the limiting barrel (13) that is away from the cover body (1) forms a necking edge (131); and
the electric contact (5) is disposed in the mounting space with a side abutting against the elastic member (4) and another side abutting against the necking edge (131).

8. The high-speed blender according to any of the preceding claims, wherein the electric contact (5) is a spherical contact.

9. The high-speed blender according to any of the preceding claims, wherein the electric contact (5) is a columnar contact, and a side of the columnar contact facing toward the necking edge (131) is provided with a hemispherical projecting portion.

10. The high-speed blender according to any of the preceding claims, wherein the detecting member (3) and the cover body (1) are integrally formed through insert molding.

## Patentansprüche

1. Hochgeschwindigkeitsmixer, der Folgendes umfasst:
einen Becherhauptteil (2),
einen Abdeckhauptteil (1), der mit einem Erkennungselement (3) versehen ist, und
eine elektrische Baugruppe, die ein elastisches Element (4), einen elektrischen Kontakt (5) und ein elektrisches Elastikteil (6) umfasst,
wobei ein Ende des elastischen Elements (4) mit dem Erkennungselement (3) und ein anderes Ende mit dem elektrischen Kontakt (5) verbunden ist,
der elektrische Kontakt (5) an dem Abdeckhauptteil (1) angeordnet und in axialer Richtung des elastischen Elements (4) hin- und herbewegbar ist,
das elektrische Elastikteil (6) an einer offenen umlaufenden Wand des Becherhauptteils (2) angeordnet und elektrisch mit einer Steuervorrichtung (7) des Hochgeschwindigkeitsmixers verbunden ist, und
der elektrische Kontakt (5), wenn der Abdeckhauptteil (1) den Becherhauptteil (2) bedeckt, das elektrische Elastikteil (6) aufgrund der Elastizität des elastischen Elements (4) entsprechend zusammendrückt, so dass das Erkennungselement (3) elektrisch mit der Steuervorrichtung (7) verbunden ist.

2. Hochgeschwindigkeitsmixer nach Anspruch 1, wobei das Erkennungselement (3) in eine umlaufende Wand des Abdeckhauptteils (1) eingebettet ist,
das Erkennungselement (3) einen Erkennungsabschnitt umfasst und an einer Innenseite der umlaufenden Wand des Abdeckhauptteils (1) eine Erkennungsöffnung (11) vorgesehen ist, die dem Erkennungsabschnitt entspricht,
aus dem Becherhauptteil (2) überlaufender Schaum über die Erkennungsöffnung (11) mit dem Erkennungsabschnitt des Erkennungselements (3) in Kontakt kommt, so dass das Erkennungselement (3) aktiviert wird, und
die Steuervorrichtung (7) den Hochgeschwindigkeitsmixer so steuert, dass er das Erhitzen und Mahlen einstellt, wenn das Erkennungselement (3) aktiviert ist.

3. Hochgeschwindigkeitsmixer nach Anspruch 1 oder 2, wobei das Erkennungselement (3) ein erstes und ein zweites Erkennungsteil umfasst,
das erste und das zweite Erkennungsteil in einem Abstand an der umlaufenden Wand des Abdeckhauptteils (1) angeordnet und jeweils über die jeweilige elektrische Baugruppe elektrisch mit der Steuervorrichtung (7) verbunden sind und
zwischen dem ersten Erkennungsteil, dem zweiten Erkennungsteil und der Steuervorrichtung (7), wenn der aus dem Becherhauptteil (2) überlaufende Schaum mit dem Erkennungsabschnitt in Kontakt kommt, eine Aktivierungschaltung gebildet wird.

4. Hochgeschwindigkeitsmixer nach Anspruch 1 oder 2, wobei das Erkennungselement (3) ein Erkennungsteil umfasst,
das Erkennungsteil über die elektrische Baugruppe elektrisch mit der Steuervorrichtung (7) verbunden ist und
zwischen dem Erkennungsteil, der Steuervorrichtung (7) und einer Heizplatte (8) des Hochgeschwindigkeitsmixers, wenn der aus dem Becherhauptteil (2) überlaufende Schaum mit dem Erkennungsabschnitt in Kontakt kommt, eine Aktivierungsschaltung gebildet wird.

5. Hochgeschwindigkeitsmixer nach Anspruch 1, wobei der Abdeckhauptteil (1) mit einem Begrenzungsstift (12) versehen ist und
ein Abschnitt, der das Erkennungselement (3) und das elastische Element (4) verbindet, mit einer Montageöffnung (31) versehen und das Erkennungselement (3) durch Aufstecken der Montageöffnung (31) auf den Begrenzungsstift (12) an das Abdeckhauptteil (1) montiert ist.

6. Hochgeschwindigkeitsmixer nach Anspruch 5, wobei der Abdeckhauptteil (1) ferner mit einem Begrenzungszylinder (13) versehen ist,
der Begrenzungszylinder (13) in einem Abstand außerhalb des Begrenzungsstifts (12) koaxial aufgesteckt ist und mit diesem einen Montageraum bildet, und
das elastische Element (4) so in dem Montageraum angeordnet ist, dass ein Ende an dem Erkennungselement (3) anliegt und auf den Begrenzungsstift (12) aufgesteckt ist.

7. Hochgeschwindigkeitsmixer nach Anspruch 6, wobei ein Ende des Begrenzungszylinders (13), das von dem Abdeckhauptteil (1) entfernt liegt, einen sich verengenden Rand (131) bildet und
der elektrische Kontakt (5) in dem Montageraum angeordnet ist, wobei eine Seite an dem elastischen Element (4) und eine andere Seite an dem sich verengenden Rand (131) anliegt.

8. Hochgeschwindigkeitsmixer nach einem der vorhergehenden Ansprüche, wobei es sich bei dem elektrischen Kontakt (5) um einen kugelförmigen Kontakt handelt.

9. Hochgeschwindigkeitsmixer nach einem der vorhergehenden Ansprüche, wobei es sich bei dem elektrischen Kontakt (5) um einen säulenförmigen Kontakt handelt und eine zu dem sich verengenden Rand (131) hin weisende Seite des säulenförmigen Kontakts mit einem halbkugelförmigen, vorstehenden Abschnitt versehen ist.

10. Hochgeschwindigkeitsmixer nach einem der vorhergehenden Ansprüche, wobei das Erkennungselement (3) und der Abdeckhauptteil (1) durch Umspritzen einstückig ausgebildet sind.

## Revendications

1. Mélangeur haute vitesse comprenant :
un corps en coupelle (2) ;
un corps de recouvrement (1) muni d'un élément de détection (3) ; et
un assemblage électrique, comprenant un élément élastique (4), un contact électrique (5) et une pièce électrique élastique (6),
dans lequel une extrémité de l'élément élastique (4) est raccordée à l'élément de détection (3), et une autre extrémité est raccordée au contact électrique (5) ;
le contact électrique (5) se trouve sur le corps de recouvrement (1) et est réciproque sur une direction axiale de l'élément élastique (4) ;
la pièce élastique électrique (6) se trouve sur une paroi périphérique ouverte du corps en coupelle (2), et est électriquement raccordée à un dispositif de commande (7) du mélangeur haute vitesse ; et
quand le corps de recouvrement (1) recouvre le corps en coupelle (2), le contact électrique (5) comprime en conséquence la pièce électrique élastique (6) sous l'élasticité de l'élément élastique (4) de sorte que l'élément de détection (3) est électriquement raccordé au dispositif de commande (7).

2. Mélangeur haute vitesse selon la revendication 1, dans lequel, l'élément de détection (3) est intégré dans une paroi périphérique du corps de recouvrement (1) ;
l'élément de détection (3) comprend une partie de détection et une cavité de détection (11) est prévue sur un côté intérieur de la paroi périphérique du corps de recouvrement (1) correspondant à la partie de détection ;
de la mousse débordant du corps en coupelle (2) entre en contact avec la partie de détection de l'élément de détection (3) par la cavité de détection (11), de sorte que l'élément de détection (3) est mis sous tension ; et
le dispositif de commande (7) commande le mélangeur haute vitesse pour qu'il arrête le chauffage et le broyage quand l'élément de détection (3) est mis sous tension.

3. Mélangeur haute vitesse selon la revendication 1 ou 2, dans lequel l'élément de détection (3) comprend une première pièce de détection et une deuxième pièce de détection ;
la première pièce de détection et la deuxième pièce de détection sont agencées par intervalle sur la paroi périphérique du corps de recouvrement (1) et elles sont respectivement électriquement raccordées au dispositif de commande (7) par l'assemblage électrique respectif ; et
quand la mousse débordant du corps en coupelle (2) entre en contact avec la partie de détection, un circuit de mise sous tension se forme entre la première pièce de contact, la deuxième pièce de contact et le dispositif de commande (7).

4. Mélangeur haute vitesse selon la revendication 1 ou 2, dans lequel l'élément de détection (3) comprend une pièce de détection ;
la pièce de détection est électriquement raccordée au dispositif de commande (7) par l'assemblage électrique ; et
quand la mousse débordant du corps en coupelle (2) entre en contact avec la partie de détection, un circuit de mise sous tension se forme entre la pièce de détection, le dispositif de commande (7) et une plaque chauffante (8) du mélangeur haute vitesse.

5. Mélangeur haute vitesse selon la revendication 1, dans lequel le corps de recouvrement (1) est muni d'un ergot limitatif (12) ; et
une partie raccordant l'élément de détection (3) et l'élément élastique (4) présente une cavité de montage (31), et l'élément de détection (3) est assemblé sur le corps de recouvrement (1) de manière à emmancher la cavité de montage (31) sur l'ergot limitatif (12).

6. Mélangeur haute vitesse selon la revendication 5, dans lequel le corps de recouvrement (1) est en outre muni d'un cylindre limitatif (13) :
le cylindre limitatif (13) est coaxialement emmanché par intervalle à l'extérieur de l'ergot limitatif (12) et forme un espace de montage avec l'ergot limitatif (12) ; et
l'élément élastique (4) se trouve dans l'espace de montage, une extrémité aboutant contre l'élément de détection (3) et emmanché sur l'ergot limitatif (12).

7. Mélangeur haute vitesse selon la revendication 6, dans lequel une extrémité du cylindre limitatif (13) éloignée du corps de recouvrement (1) forme un bord de rétrécissement (131) ; et
le contact électrique (5) se trouve dans l'espace de montage, un côté aboutant contre l'élément élastique (4) et un autre côté aboutant contre le bord de rétrécissement (131).

8. Mélangeur haute vitesse selon l'une quelconque des revendications précédentes,
dans lequel le contact électrique (5) est un contact sphérique.

9. Mélangeur haute vitesse selon l'une quelconque des revendications précédentes, dans lequel le contact électrique (5) est un contact en colonne, et un côté du contact en colonne faisant face au bord de rétrécissement (131) est muni d'une partie en saillie hémisphérique.

10. Mélangeur haute vitesse selon l'une quelconque des revendications précédentes, dans lequel l'élément de détection (3) et le corps de recouvrement (1) sont formés d'un seul tenant par moulage par insertion.
